# EUROPEAN PATENT SPECIFICATION

(11) **EP 3 040 977 B1**
(45) Date of publication and mention of the grant of the patent: **29.09.2021**
(21) Application number: 15190518.9
(22) Date of filing: 20.10.2015
(51) Int. Cl.: G09G 3/20, G09G 3/3266, G09G 3/36

(54) **DISPLAY DEVICE**
ANZEIGEVORRICHTUNG
DISPOSITIF D'AFFICHAGE

(30) Priority: 31.12.2014 KR 20140195750
(43) Date of publication of application: 06.07.2016
(73) Proprietor: LG Display Co., Ltd., SEOUL, 07336 (KR)
(72) Inventor: KIM, Hyunchul, 718-704 Gyeongbuk (KR); KIM, Daehwan, 703-847 Daegu (KR)
(74) Representative: Ter Meer Steinmeister & Partner

(56) References cited:
- US-A1- 2004 263 452
- US-A1- 2009 289 884
- US-A1- 2012 038 610
- US-A1- 2012 262 497
- US-A1- 2013 088 470
- US-A1- 2014 111 718

## Description

This application claims the benefit of Korean Patent Application No. 10-2014-0195750 filed on December 31, 2014.

### BACKGROUND OF THE INVENTION

### Field of the Invention

This document relates to a display device.

### Discussion of the Related Art

Flat panel displays include liquid crystal displays (LCDs), field emission displays (FEDs), plasma display panels (PDPs), organic light emitting diode displays (OLEDs), and so on. In a flat panel display, data lines and gate lines are disposed to cross at right angles, and a crossing of a data line and a gate line is defined as a pixel. A plurality of pixels are formed in a matrix on a panel. To drive each pixel, a video data voltage to be displayed is supplied to the data lines, and a gate pulse is sequentially supplied to the gate lines. And, the video data voltage is supplied to the pixels on display lines to which the gate pulse is supplied. As every display line is sequentially scanned by the gate pulse, video data is displayed.

In keeping with the recent trend of large-sized panels for displays, the gate lines are becoming longer, and this leads to problems due to gate pulse delays. As one of the measures to solve these problems, gate pulse modulation (GPM) was suggested, in which the voltage level of a gate pulse is raised and the voltage level decreases with a different slope during the fall time.

US 2014/0111718 A1 and US 2004/0263452 A1 disclose a driver circuit for LCD panel that includes a gate driver with drive circuits that provide improved GPM signal waveforms to increase the display quality.

US 2013/0088470 A1 discloses a LCD panel having an adaptive pulse shaping control mechanism. Each scan driver comprises a modulation unit and a gate driver. A pulse falling depth of the gate signals can be equalized by a control signal of the timing controller based on the pulse falling time difference of the gate signal.

US 2012/038610 A1 discloses a gate pulse modulating circuit that includes a timing controller for generating an output enable signal and a plurality of timing control signals; a high gate voltage generating unit, electrically connected to the timing controller for receiving the timing control signals, capable of generating a high gate voltage with a waveform including a plurality of cutting edges in response to the timing control signals; a low gate voltage generating unit capable of generating a low gate voltage; and a gate driver, electrically connected to the timing controller for receiving the output enable signal and the high gate voltage generating unit for receiving the high gate voltage and the low gate voltage generating unit for receiving the low gate voltage, capable of generating a plurality of gate pulses in response to a plurality of enable periods of the output enable signal; wherein a waveform of the gate pulses includes a plurality of cutting edges.

According to US 2012/0262497 A1 and US 2013/0088470 A1, a GPM IC that generates a GPM signal by gate pulse modulation may be incorporated in each gate drive IC. A problem with this technique is that GPM signals generated by the GPM IC of each gate drive IC have different waveforms due to differences in resistance between RE lines needed for gate pulse modulation. In US 2009/0289884 A1 a display device comprises a plurality of scan signal line driver for generating scan signals for driving the scan lines. Each scan line driver internally generates a driving signal and includes a signal wiring for interconnecting all scan signal line drivers.

### SUMMARY OF THE INVENTION

The above identified problem is solved by the features of the independent claim. Advantageous embodiments are described with the dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIGS. 1 and 2 are views showing a display device according to the present invention;
FIGS. 3 and 4 are views showing a configuration of gate drive ICs;
FIG. 5 is a view showing an example of a GPM signal;
FIG. 6 is a view showing a display device according to a comparative example; and
FIG. 7 is an equivalent circuit diagram showing differences in resistance between RE log lines in the display device of FIG. 6.

### DETAILED DESCRIPTION OF THE ILLUSTRATED EMBODIMENTS

Hereinafter, exemplary embodiments of the present invention will be described with reference to the drawings. Throughout the specification, like reference numerals denote substantially like components. In the following description, if it is decided that the detailed description of known function or configuration related to the invention makes the subject matter of the invention unclear, the detailed description is omitted.

Although this specification describes the present invention based on exemplary embodiments of a liquid crystal display, the present invention may be applicable to field emission displays (FEDs), plasma display panels (PDPs), organic light emitting diode devices (OLEDs), and so on.

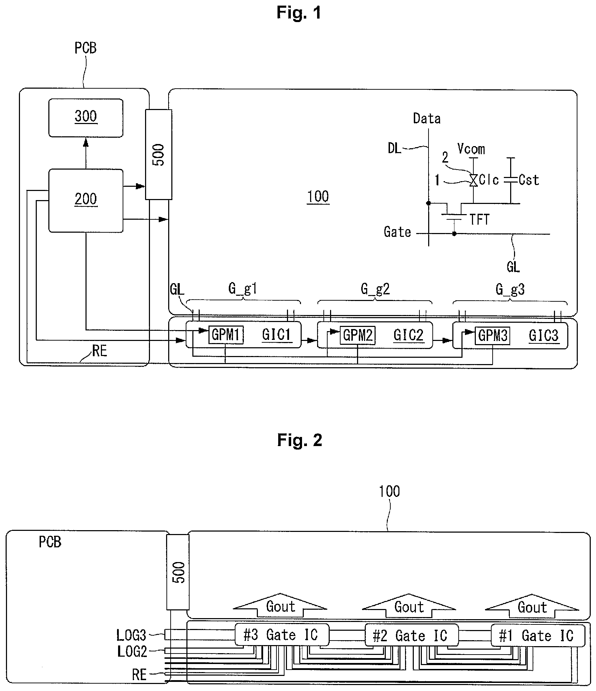

FIG. 1 is a view showing a display device according to the present invention, FIG. 2 is a view showing layers of log lines in the display device of FIG. 1, and FIGS. 3 and 4 are views showing a configuration of gate drive ICs shown in FIG. 1.

Referring to FIGS. 1 to 4, a display device of this invention comprises a display panel 100, a power module 200, a timing controller 300, gate drive ICs GIC, and source drive ICs 500.

The display panel 100 comprises a pixel array with a matrix of pixels to display input image data. The pixel array comprises a TFT array formed on a lower substrate, a color filter array formed on an upper substrate, and liquid crystal cells Clc formed between the upper and lower substrates. On the TFT array are data lines DL, gate lines GL intersecting the data lines DL, TFTs formed at every intersection between the data lines DL and the gate lines GL, pixel electrodes 1 connected to the TFTs, storage capacitors Cst, and so on. On the color filter array, a black matrix and color filters are formed. A common electrode 2 may be formed on either the lower substrate or the upper substrate. The liquid crystal cells Clc are driven by an electric field between the pixel electrodes 1 supplied with a data voltage and the common electrode 2 supplied with a common voltage Vcom. Polarizers with optical axes orthogonal to each other are attached to the upper and lower substrates of the display panel 100, and an alignment film for setting a pre-tilt angle of liquid crystals is formed at an interface contacting a liquid crystal layer.

The display panel 100 comprises a plurality of gate groups G_g, e.g., first to third gate groups G_g1 to G_g3. The first to third gate groups G_g1 to G_g3 comprise a plurality of gate lines.

The power module 200 starts to operate when an input voltage Vin is above an UVLO level, and produces output after a delay of a predetermined time. The output of the power module 200 comprises VGH, VGL, VCC, VDD, etc. The VCC may be a logic power supply voltage of, for example, 3.3 V, for driving the timing controller 300, gate drive ICs GIC, and source drive ICs 500. The VDD may be a high power supply voltage that is to be supplied to a voltage-dividing circuit in a gamma reference voltage generating circuit for generating positive/negative gamma reference voltages. The positive/negative gamma reference voltages are supplied to the source drive ICs 500.

The timing controller 300 receives digital video data RGB from an external host, and receives timing signals such as a vertical synchronization signal Vsync, a horizontal synchronization signal Hsync, a data enable signal DE, a main clock CLK, etc. The timing controller 300 transmits the digital video data RGB to the source drive ICs 500. The timing controller 300 generates a source timing control signal for controlling the operation timing of the source drive ICs 500, and gate timing control signals ST, GCLK, and MCLK for controlling the operation timings of level shifters 410 and shifter registers 420 of the gate drive ICs GIC.

Also, the timing controller 300 outputs a GPM control signal GPM enable. The GPM control signal GPM enable determines whether to enable the gate pulse modulators GPM or not. A first gate drive IC GIC1 receives a GPM control signal GPM enable of first logic, and second drive IC GIC2 and third drive IC GIC3 receive a GPM control signal GPM enable of second logic. The GPM control signal GPM enable of first logic enables the gate pulse modulators GPM, and the GPM control signal GPM enable of second logic disables the gate pulse modulators GPM.

The source drive ICs 500 comprises a plurality of source drive ICs (integrated circuits) 500. The source drive ICs 500 receive digital video data RGB from the timing controller 300. The source drive ICs 500 receive digital video data RGB from the timing controller 300. The source drive ICs 500 convert the digital video data RGB to a positive/negative analog data voltage in response to a source timing control signal from the timing controller 300, and then supply the data voltage to the data lines DL of the display panel 100, in synchronization with a gate pulse (or scan pulse).

The gate drive ICs GIC output gate pulses Gout by using gate timing control signals.

The gate timing control signals comprise a gate start pulse GSP, a gate shift clock GSC, and a gate output enable GOE. The gate start pulse GSP indicates a start line at which the gate drive ICs GIC output a first gate pulse Gout. The gate shift clock GSC is a clock for shifting the gate start pulse GSP. The gate output enable GOE is for setting the duration of a gate pulse Gout.

Each gate drive IC GIC comprises a gate pulse generator 400 and a gate pulse modulator GPM.

The gate pulse generator 400 comprises a shift register 410, a level shifter 420, a buffer 430, and an output part 440. The shift register 410 sequentially shifts the gate start pulse GSP according to the gate shift clock GSC by using a plurality of flip flops connected as a cascade. The level shifter 420 varies the shift register 410's output to a voltage level at which the TFTs on the display panel can be run.

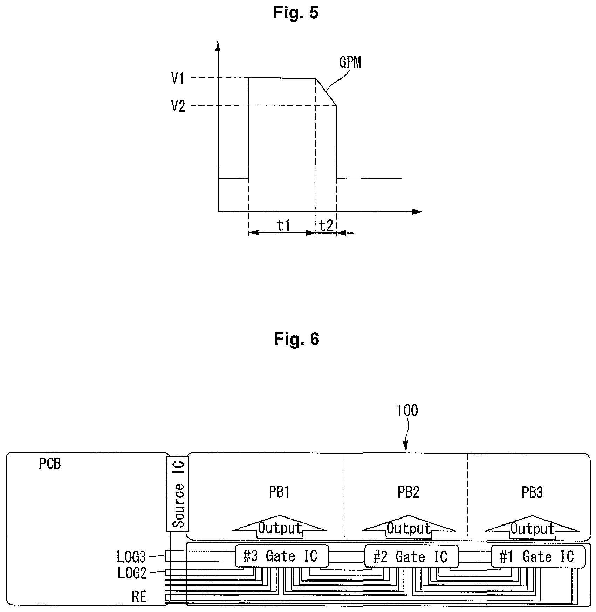

A first gate pulse modulator GPM1 modulates the voltage level of a gate pulse Gout generated by a first gate pulse generator 400-1. FIG. 5 is a view showing a gate pulse modulated by a gate pulse modulator GPM. As shown in the drawing, the gate pulse modulator GPM varies the falling slope of the gate pulse Gout. An operation of a signal (hereinafter, GPM) for varying the falling slope of the gate pulse Gout shown in FIG. 5 is a well-known art, so a detailed description thereof will be omitted.

The second gate pulse modulator GPM2 and the third gate pulse modulator GPM3 are selectively enabled by a GPM control signal GPM enable from the timing controller 300. That is, the second gate pulse modulator GPM2 and the third gate pulse modulator GPM3 do not become enabled by the input of a GPM control signal of a second voltage level.

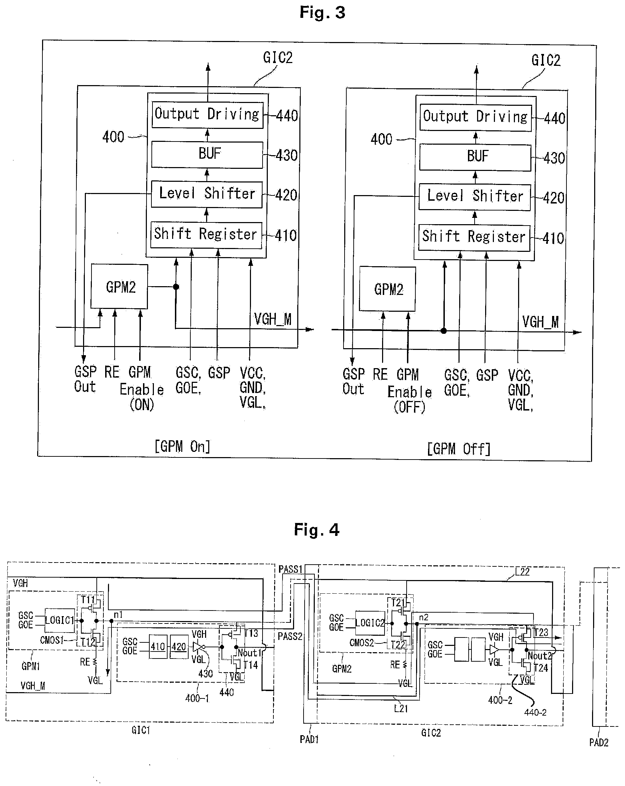

The first gate pulse modulator GPM1 discharges a gate pulse Gout output from the gate pulse generator 400 to generate a GPM signal. This will be discussed with reference to FIGS. 4 and 5.

The first gate pulse modulator GPM1 comprises a first logic part LOGIC1 and a first CMOS inverter INV1.

The first logic part LOGIC1 sequentially shifts gate timing signals such as a gate start clock GSC and a gate output enable GOE. The first CMOS inverter INV1 comprises a first transistor T11 and a second transistor T12. A gate electrode of the first transistor T11 is connected to an output of the first logic part LOGIC1, its drain electrode is connected to a high-voltage input, and its source electrode is connected to a first output terminal n1. A gate electrode of the second transistor T12 is connected to the output of the first logic part LOGIC1, its drain electrode is connected to a low voltage(VGL) input, and its source electrode is connected to the first output terminal n1.

During a first period t1, the first transistor T11 of the first gate pulse modulator GPM1 is turned on in response to an output of the first logic part LOGIC1. With the first transistor T11 being turned on, a high voltage VGH received at the drain electrode is provided to the output part 440 of the gate pulse generator 400-1. A P-type element T13 of the output part 440 outputs the high voltage VGH at a first voltage level, and the gate pulse Gout remains at the first voltage level.

During a second period t2, the second transistor T12 of the first gate pulse modulator GPM1 is turned on in response to an output of the logic part LOGIC1. With the second transistor T12 being turned on, the output voltage of the output part 440 of the gate pulse generator 400 is discharged via the second transistor T12. That is, during the second period t2, the voltage level of the gate pulse Gout gradually decreases from the first voltage level VGH to a second voltage level VGH2, whereby a GPM signal is generated.

Through this process, as described above, the logic part LOGIC of the second gate pulse modulator GPM2 of the second gate drive IC GIC2 is disabled (off) by a GPM control signal GPM enable.

The second gate drive IC GIC2 generates a GPM signal by using the first gate pulse modulator GPM1 in place of the second gate pulse modulator GPM2.

A voltage discharge path for GPM signal generation of the second gate drive IC GIC2 will be discussed below.

Each gate drive IC GIC is connected through conductive pads PAD formed on the display panel 100. A first conductive pattern L21 and a second conductive pattern L22 are formed within each gate drive IC GIC. The first conductive pad PAD1 connects the first output terminal n1 of the first gate pulse modulator GPM1 and the second output terminal n2 of the second gate pulse modulator GPM2. The first conductive pattern L21 of the second gate drive IC GIC2 connects the first conductive pad PAD1 and the second output terminal n2.

Due to this, the second output part 440-2 of the second gate drive IC GIC2 receives a high voltage and outputs a gate pulse, through a first path pass1 connecting the first output terminal n1 of the gate pulse modulator GPM of the first gate drive IC GIC1 and the conductive pad PAD1 and first conductive pattern L21 of the second gate drive IC GIC2.

The second output part 440-2 of the second gate drive IC GIC2 generates a GPM signal by discharging the gate pulse of the first voltage level VGH through a second path pass2 connecting the first conductive pattern L21 and first conductive pad PAD1 and the output and first log line RE of the first gate pulse modulator GPM1.

The second conductive pattern L22 of the second gate drive IC GIC2 electrically connects the first conductive pad PAD1 and the third gate drive IC GIC3.

In this way, the second gate drive IC GIC2 and the third gate drive IC GIC3 may generate GPM signals without enabling the second gate pulse modulator GPM2 and the third gate pulse modulator GPM3, respectively. That is, as shown in FIG. 2, the display device according to the exemplary embodiment of the present invention may work without the first log lines being connected to the second gate pulse modulator GPM2 and the third gate pulse modulator GPM3. Accordingly, the area of the display panel where first log lines are disposed may be reduced, compared to a comparative example shown in FIG. 6 in which the gate pulse modulators GPM of all the gate drive ICs GIC are enabled.

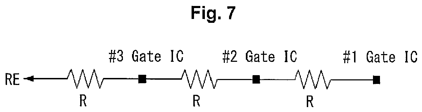

Also, in the comparative example shown in FIG. 6, the first log lines RE of all the gate drive ICs GIC are connected together to a low voltage VGL source through a printed circuit board PCB. Accordingly, the first log lines RE connecting all the gate drive ICs GIC and the low-voltage source have different resistance values. For example, as shown in FIG. 7, if the resistance value of the first log line RE of the third gate drive IC GIC3 is R, the resistance value of the first log line RE of the first gate drive IC GIC1 is 3R. That is, each gate drive IC outputs GPM signals with different waveforms because the GPM signals are generated based on the first log lines RE having different resistance values. Accordingly, block dimming occurs to panel blocks PB1 to PB3 the gate drive ICs GIC are in charge of, due to differences in gate pulse delay time.

On the contrary, in the exemplary embodiment of the present invention, all the gate drive ICs GIC generate GPM signals through the first log line RE of the first gate drive IC GIC1, and therefore the differences in gate pulse delay time, caused by the different resistance values of the first log lines of the gate drive ICs GIC, may be avoided.

Also, the second gate drive IC GIC2 and third gate drive IC GIC3 of this invention may be connected to the gate pulse modulator GPM1 of the first gate drive IC GIC1 through the first conductive pad PAD1 and the second conductive pad PAD2.

In the comparative example shown in FIG. 6, the second gate drive IC GIC2 receives a high voltage through the first transistor T21 of the second gate pulse modulator GPM2. Accordingly, there is a gate pulse output deviation between the second gate drive IC GIC2 and the first gate drive IC GIC1, due to a turn-on resistance of the first transistor T21 of the second gate pulse modulator GPM2.

On the other hand, the second gate drive IC GIC2 according to the exemplary embodiment of the present invention may generate a GPM signal through the first conductive pattern L21 and the conductive pad PAD1. This may eliminate the turn-on resistance of the transistor.

The foregoing exemplary embodiment of the present invention has been described with respect to an example where each gate drive IC GIC is equipped with a gate pulse modulator GPM. That is, the exemplary embodiment of the present invention may be applicable to a conventional display device using gate drive ICs GIC each equipped with a gate pulse modulator GPM.

## Claims

1. A display device comprising:
a display panel (100) comprising a first gate block in which a first gate line group is disposed and a second gate block in which a second gate line group is disposed;
a first gate drive IC (GIC1) adapted to generate a gate pulse modulated, GPM, signal and to provide the GPM signal to the first gate line group; and
a second gate drive IC (GIC2) adapted to generate a GPM signal and to provide the GPM signal to the second gate line group,
wherein the first gate drive IC (GIC1) comprises:
a first gate pulse modulator (GPM1) adapted to output on a first output terminal (n1) a signal having a high voltage (VGH) during a first period (t1) and gradually decreasing from the high voltage (VGH) to a second voltage level (VGH2) during a second period (t2), wherein the first gate pulse modulator (GPM1) comprising a first logic part (LOGIC1) and a first CMOS inverter (INV1) having an input connected to the first logic part (LOGIC1) and an output connected to the first output terminal (n1);
a first gate pulse generator (400-1) comprising a shift register (410) adapted to sequentially shift a gate start pulse (GSP) according to the gate shift clock (GSC) and an output-part connected to the first output terminal (n1), coupled to the output of the shift register (410) and adapted to output the GPM signal pulse,
wherein the second gate drive IC (GIC2) comprises:
a second gate pulse modulator (GPM2) adapted to output on a second output terminal (n2) a signal having a high voltage (VGH) during a first period (t1') and gradually decreasing from the high voltage (VGH) to the second voltage level (VGH2) during a second period (t2'), wherein the second gate pulse modulator (GPM2) comprising a second logic part (LOGIC2) and a second CMOS inverter (INV2) having an input connected to the second logic part (LOGIC2) and an output connected to the second output terminal (n2);
a second gate pulse generator (400-2) comprising a second shift register adapted to sequentially shift a gate start pulse (GSP) according to the gate shift clock (GSC) and an output-part connected to the second output terminal (n2), coupled to the output of the second shift register and adapted to output the GPM signal pulse; and
the display device further comprising a first conductive pad (PAD1) that electrically connects the output terminal (n1) of the first gate pulse modulator (GPM1) to the second output terminal (n2) of the second gate pulse modulator (GPM2) and a timing controller (300);
**characterized in that**
the timing controller (300) is adapted to output a control signal (GPM_enable) having a first level and a second level, the control signal (GPM enable) being connected to the second logic part (LOGIC2),
the second logic part (LOGIC2) is adapted to be disabled and enabled based on the control signal (GPM_enable) such that the second gate drive IC (GIC2) is adapted to generate the GPM signal by using the first gate pulse generator (400-1) when the second gate pulse modulator (GPM2) is disabled,
each of the first and second CMOS inverters (INV1, INV2) is built from a first P-type transistor (T11) and a second N-type transistor (T12), wherein the first P-type transistor (T11) is connected to a high voltage (VGH) source to provide the first voltage level to the first gate pulse generator (400-1), wherein the second N-type transistor (T12) is connected to a low voltage (VGL) source, and the low voltage (VGL) source is connected to the second transistor (T12) through a line on glass, LOG, (RE) of the display panel (100);
wherein a voltage discharge path for the GPM signal generated by the second gate drive IC (GIC2) is formed by the first conductive pad (PAD1) that electrically connects the output terminal (n1) of the first gate pulse modulator (GPM1) to the second output terminal (n2) of the second gate pulse modulator (GPM2) of the second gate drive IC (GIC2), wherein the voltage discharge path is configured to discharge the signal having the first voltage level (VGH) via the LOG (RE) of the first inverter (INV1) of the first gate pulse modulator (GPM1).

2. The display device of claim 1, wherein the first gate pulse generator (400-1) is connected to the low voltage (VGL) source through the first LOG (RE).

3. The display device of claim 1, wherein the first conductive pad (PAD1) is formed on one side of the second gate drive IC (GIC2).

4. The display device of claim 3, further comprising a third gate drive IC (GIC3) comprising a third gate pulse generator (400-3) and a third gate pulse modulator (GPM3), wherein the display panel (100) further comprises a second conductive pad (PAD2) connecting the first conductive pad (PAD1) and the third gate drive IC (GIC3).

## Patentansprüche

1. Anzeigevorrichtung, die Folgendes umfasst:
eine Anzeigetafel (100), die einen ersten Gate-Block, in dem eine erste Gate-Leitungsgruppe angeordnet ist, und einen zweiten Gate-Block, in dem eine zweite Gate-Leitungsgruppe angeordnet ist, umfasst;
eine erste integrierte Gate-Ansteuerschaltung (GIC1), die ausgelegt ist, ein pulsmoduliertes Gate-Signal (GPM-Signal) zu erzeugen und das GPM-Signal für die erste Gate-Leitungsgruppe bereitzustellen; und
eine zweite integrierte Gate-Ansteuerschaltung (GIC2), die ausgelegt ist, ein GPM-Signal zu erzeugen und das GPM-Signal für die zweite Gate-Leitungsgruppe bereitzustellen,
wobei die erste integrierte Gate-Ansteuerschaltung (GIC1) Folgendes umfasst:
einen ersten Gate-Pulsmodulator (GPM1), der ausgelegt ist, an einem ersten Ausgangsanschluss (n1) ein Signal auszugeben, das während einer ersten Periode (t1) eine hohe Spannung (VGH) hat, und während einer zweiten Periode (t2) von der hohen Spannung (VGH) auf eine zweite Spannungshöhe (VGH2) schrittweise abnimmt, wobei der erste Gate-Pulsmodulator (GPM1) ein erstes Logikelement (LOGIC1) und einen ersten CMOS-Wechselrichter (INV1), wovon ein Eingang mit dem ersten Logikelement (LOGIC1) und ein Ausgang mit dem ersten Ausgangsanschluss (n1) verbunden ist, umfasst;
einen ersten Gate-Pulsgenerator (400-1), der ein Schieberegister (410), das ausgelegt ist, einen Gate-Startpuls (GSP) in Übereinstimmung mit dem Gate-Verschiebungstakt (GSC) nacheinander zu verschieben, und ein Ausgabeelement, das mit dem ersten Ausgangsanschluss (n1) verbunden ist, das mit dem Ausgang des Schieberegisters (410) gekoppelt ist und ausgelegt ist, den GPM-Signalpuls auszugeben, umfasst,
wobei die zweite integrierte Gate-Ansteuerschaltung (GIC2) Folgendes umfasst:
einen zweiten Gate-Pulsmodulator (GPM2), der ausgelegt ist, an einem zweiten Ausgangsanschluss (n2) ein Signal auszugeben, das während einer ersten Periode (t1') eine hohe Spannung (VGH) hat, und während einer zweiten Periode (t2') von der hohen Spannung (VGH) auf die zweite Spannungshöhe (VGH2) schrittweise abnimmt, wobei der zweite Gate-Pulsmodulator (GPM2) ein zweites Logikelement (LOGIC2) und einen zweiten CMOS-Wechselrichter (INV2), wovon ein Eingang mit dem zweiten Logikelement (LOGIC2) und ein Ausgang mit dem zweiten Ausgangsanschluss (n2) verbunden ist, umfasst;
einen zweiten Gate-Pulsgenerator (400-2), der ein zweites Schieberegister (410), das ausgelegt ist, einen Gate-Startpuls (GSP) in Übereinstimmung mit dem Gate-Verschiebungstakt (GSC) nacheinander zu verschieben, und ein Ausgabeelement, das mit dem zweiten Ausgangsanschluss (n2) verbunden ist, das mit dem Ausgang des zweiten Schieberegisters gekoppelt ist und ausgelegt ist, den GPM-Signalpuls auszugeben, umfasst; und
wobei die Anzeigevorrichtung ferner einen ersten leitfähigen Kontakt (PAD1) umfasst, der den Ausgangsanschluss (n1) des ersten Gate-Pulsmodulators (GPM1) mit dem zweiten Ausgangsanschluss (n2) des zweiten Gate-Pulsmodulators (GPM2) und einer Taktsteuerung (300) elektrisch verbindet;
**dadurch gekennzeichnet, dass**
die Taktsteuerung (300) ausgelegt ist, ein Steuersignal (GPM_enable) auszugeben, das eine erste Höhe und eine zweite Höhe hat, wobei das Steuersignal (GPM_enable) mit dem zweiten Logikelement (LOGIC2) verbunden ist,
das zweite Logikelement (LOGIC2) so ausgelegt ist, dass es auf der Basis des Steuersignals (GPM_enable) eingeschaltet und ausgeschaltet wird, so dass die zweite integrierte Gate-Ansteuerschaltung (GIC2) ausgelegt ist, das GPM-Signal unter Verwendung des ersten Gate-Pulsgenerators (400-1) zu erzeugen, wenn der zweite Gate-Pulsmodulator (GPM2) ausgeschaltet ist,
der erste und der zweite CMOS-Wechselrichter (INV1, INV2) aus einem ersten p-Typ-Transistor (T11) und einem zweiten n-Typ-Transistor (T12) gebildet ist, wobei der erste p-Typ-Transistor (T11) mit einer Hochspannungsquelle (VGH) verbunden ist, um die erste Spannungshöhe für den ersten Gate-Pulsgenerator (400-1) bereitzustellen, wobei der zweite n-Typ-Transistor (T12) mit einer Niederspannungsquelle (VGL) verbunden ist und wobei die Niederspannungsquelle (VGL) mit dem zweiten Transistor (T12) durch ein Glaskabel LOG (RE) der Anzeigetafel (100) verbunden ist;
wobei ein Spannungsableitpfad für das GPM-Signal, das durch die zweite integrierte Gate-Ansteuerschaltung (GIC2) erzeugt wird, durch den ersten leitfähigen Kontakt (PAD1) gebildet wird, der den Ausgangsanschluss (n1) des ersten Gate-Pulsmodulators (GPM1) mit dem zweiten Ausgangsanschluss (n2) des zweiten Gate-Pulsmodulators (GPM2) der zweiten integrierten Gate-Ansteuerschaltung (GIC2) verbindet, wobei der Spannungsableitpfad konfiguriert ist, das Signal, das die erste Spannungshöhe (VGH) hat, über das LOG (RE) des ersten Wechselrichters (INV1) des ersten Gate-Pulsmodulators (GPM1) abzuleiten.

2. Anzeigevorrichtung nach Anspruch 1, wobei der erste Gate-Pulsgenerator (400-1) mit der Niederspannungsquelle (VGL) durch das erste LOG (RE) verbunden ist.

3. Anzeigevorrichtung nach Anspruch 1, wobei der erste leitfähige Kontakt (PAD1) auf einer Seite der zweiten integrierten Gate-Ansteuerschaltung (GIC2) ausgebildet ist.

4. Anzeigevorrichtung nach Anspruch 3, die ferner eine dritte integrierte Gate-Ansteuerschaltung (GIC3) umfasst, die einen dritten Gate-Pulsgenerator (400-3) und einen dritten Gate-Pulsmodulator (GPM3) umfasst,
wobei die Anzeigetafel (100) ferner einen zweiten leitfähigen Kontakt (PAD2) umfasst, der den ersten leitfähigen Kontakt (PAD1) und die dritte integrierte Gate-Ansteuerschaltung (GIC3) verbindet.

## Revendications

1. Dispositif d'affichage comportant :
un panneau d'affichage (100) comportant un premier bloc de grilles dans lequel un premier groupe de lignes de grille est disposé et un second bloc de grilles dans lequel un second groupe de lignes de grille est disposé ;
un premier IC d'attaque de grille (GIC1) adapté pour générer un signal à impulsions de grille modulées, GPM, et pour délivrer le signal GPM au premier groupe de lignes de grille ; et
un deuxième IC d'attaque de grille (GIC2) adapté pour générer un signal GPM et pour délivrer le signal GPM au second groupe de lignes de grille,
dans lequel le premier IC d'attaque de grille (GIC1) comporte :
un premier modulateur d'impulsions de grille (GPM1) adapté pour délivrer à la sortie d'une première borne de sortie (n1) un signal ayant une tension élevée (VGH) pendant une première période (t1) et baissant graduellement à partir de la tension élevée (VGH) jusqu'à un second niveau de tension (VGH2) pendant une seconde période (t2), dans lequel le premier modulateur d'impulsions de grille (GPM1) comporte une première partie logique (LOGIC1) et un premier onduleur CMOS (INV1) ayant une entrée connectée à la première partie logique (LOGIC1) et une sortie connectée à la première borne de sortie (n1) ;
un premier générateur d'impulsions de grille (400-1) comportant un registre de décalage (410) adapté pour décaler séquentiellement une impulsion de déclenchement de grille (GSP) en fonction de l'horloge de décalage de grille (GSC) et une partie de sortie connectée à la première borne de sortie (n1), couplée à la sortie du registre de décalage (410) et adaptée pour délivrer en sortie l'impulsion de signal GPM,
dans lequel le deuxième IC d'attaque de grille (GIC2) comporte :
un deuxième modulateur d'impulsions de grille (GPM2) adapté pour délivrer à la sortie d'une seconde borne de sortie (n2) un signal ayant une tension élevée (VGH) pendant une première période (t1') et baissant graduellement à partir de la tension élevée (VGH) jusqu'au second niveau de tension (VGH2) pendant une seconde période (t2'), dans lequel le deuxième modulateur d'impulsions de grille (GPM2) comporte une seconde partie logique (LOGIC2) et un second onduleur CMOS (INV2) ayant une entrée connectée à la seconde partie logique (LOGIC2) et une sortie connectée à la seconde borne de sortie (n2) ;
un deuxième générateur d'impulsions de grille (400-2) comportant un second registre de décalage adapté pour décaler séquentiellement une impulsion de déclenchement de grille (GSP) en fonction de l'horloge de décalage de grille (GSC) et une partie de sortie connectée à la seconde borne de sortie (n2), couplée à la sortie du second registre de décalage et adaptée pour délivrer en sortie l'impulsion de signal GPM ; et
le dispositif d'affichage comportant en outre un premier micropavé conducteur (PAD1) qui connecte électriquement la borne de sortie (n1) du premier modulateur d'impulsions de grille (GMP1) à la seconde borne de sortie (n2) du deuxième modulateur d'impulsions de grille (GMP2) et une commande de synchronisation (300) ;
**caractérisé en ce que**
la commande de synchronisation (300) est adaptée pour délivrer en sortie un signal de commande (GPM_enable) ayant un premier niveau et un second niveau, le signal de commande (GPM enable) étant connecté à la seconde partie logique (LOGIC2),
la seconde partie logique (LOGIC2) est adaptée pour être désactivée et activée sur la base du signal de commande (GPM_enable) de telle sorte que le deuxième IC d'attaque de grille (GIC2) est adapté pour générer le signal GPM en utilisant le premier générateur d'impulsions de grille (400-1) lorsque le deuxième modulateur d'impulsions de grille (GPM2) est désactivé,
chacun des premier et second onduleurs CMOS (INV1, INV2) est construit à partir d'un premier transistor de type P (T11) et d'un second transistor de type N (T12), dans lequel le premier transistor de type P (T11) est connecté à une source de tension élevée (VGH) pour fournir le premier niveau de tension au premier générateur d'impulsions de grille (400-1), dans lequel le second transistor de type N (T12) est connecté à une source de tension faible (VGL), et la source de tension faible (VGL) est connectée au second transistor (T12) via une ligne sur verre, LOG (RE) du panneau d'affichage (100) ;
dans lequel un trajet de décharge de tension pour le signal GPM généré par le deuxième IC d'attaque de grille (GIC2) est formé par le premier micropavé conducteur (PAD1) qui connecte électriquement la borne de sortie (n1) du premier modulateur d'impulsions de grille (GPM1) à la seconde borne de sortie (n2) du deuxième modulateur d'impulsions de grille (GPM2) du deuxième IC d'attaque de grille (GIC2), dans lequel le trajet de décharge de tension est configuré pour décharger le signal ayant le premier niveau de tension (VGH) via le LOG (RE) du premier onduleur (INV1) du premier modulateur d'impulsions de grille (GPM1).

2. Dispositif d'affichage selon la revendication 1, dans lequel le premier générateur d'impulsions de grille (400-1) est connecté à la source de tension faible (VGL) via le premier LOG (RE).

3. Dispositif d'affichage selon la revendication 1, dans lequel le premier micropavé conducteur (PAD1) est formé sur un côté du deuxième IC d'attaque de grille (GI2).

4. Dispositif d'affichage selon la revendication 3, comportant en outre un troisième IC d'attaque de grille (GIC3) comportant un troisième générateur d'impulsions de grille (400-3) et un troisième modulateur d'impulsions de grille (GPM3),
dans lequel le panneau d'affichage (100) comporte en outre un second micropavé conducteur (PAD2) connectant le premier micropavé conducteur (PAD1) et le troisième IC d'attaque de grille (GIC3).
